# NEUE EUROPÄISCHE PATENTSCHRIFT

(11) **EP 2 953 798 B2**
(45) Veröffentlichungstag und Bekanntmachung des Hinweises auf die Entscheidung über den Einspruch: **06.05.2026**
(45) Hinweis auf die Patenterteilung: 04.10.2017
(21) Anmeldenummer: 14702192.7
(22) Anmeldetag: 30.01.2014
(51) Int. Cl.: B42D 25/29, B42D 25/328, B42D 25/342, B42D 25/355, G02B 5/09

(54) **OPTISCH VARIABLES FLÄCHENMUSTER**
OPTICALLY VARIABLE SURFACE PATTERN
DESSIN DE SURFACE À VARIABILITÉ OPTIQUE

(30) Priorität: 07.02.2013 DE 102013002137
(43) Veröffentlichungstag der Anmeldung: 16.12.2015
(73) Patentinhaber: Giesecke+Devrient Currency Technology GmbH, 81677 München (DE)
(72) Erfinder: FUHSE, Christian, 83624 Otterfing (DE); RAUCH, Andreas, D-83666 Waakirchen (DE); HOFFMÜLLER, Winfried, 83646 Bad Tölz (DE)
(74) Vertreter: LKGLOBAL Partnerschaftsgesellschaft mbB
(86) Internationale Anmeldenummer: PCT/EP2014/000251
(87) Internationale Veröffentlichungsnummer: WO 2014/121908

(56) Entgegenhaltungen:
- WO-A2-2009/013000
- DE-A1- 102010 047 250
- US-A- 1 996 539
- US-A1- 2005 106 367

## Beschreibung

Die vorliegende Erfindung betrifft ein optisch variables Flächenmuster, das zumindest zwei Teilbereiche mit Reflexionselementen aufweist, wobei die Reflexionselemente des ersten Teilbereichs einerseits und die Reflexionselemente des zweiten Teilbereichs andererseits einfallendes Licht in unterschiedliche Reflexionsrichtungen reflektieren.

Die DE 10 2010 047 250 A1, die den Oberbegriff des Anspruchs 1 offenbart, zeigt ein solches optisch variables Flächenmuster, wobei die Reflexionselemente als geprägte Mikrospiegelstrukturen ausgebildet sind, auf denen eine farbkippende Schicht aufgebracht sein kann. Die farbkippende Schicht kann insbesondere als Dünnfilm-Interferenzbeschichtung ausgebildet sein.

Ferner sind optisch variable Sicherheitsmerkmale bekannt, die einem Betrachter beim Kippen einen Bewegungseffekt in Kombination mit einem Farbwechsel darbieten. Weit verbreitet ist im Banknotenbereich beispielsweise die Effektfarbe SPARK der Schweizer Firma SICPA HOLDING SA. Diese Farbe basiert auf plättchenförmigen Pigmenten, die mit einem Dünnfilm-Interferenzsystem beschichtet und nach dem Druck magnetisch ausgerichtet werden. Besonders bekannt ist dabei der "Rolling Bar"-Effekt, bei dem die Pigmente so ausgerichtet sind, dass beispielsweise innerhalb einer Wertzahl beim Kippen ein heller Balken auf und ab läuft, der dabei auch noch die Farbe wechselt. Der Farbwechseleffekt beruht dabei auf dem Dünnfilm-Interferenzsystem der Pigmente.

Die beschriebenen Interferenzbeschichtungen sind üblicherweise ein Schichtsystem Absorber/Dielektrikum/Reflektor (z.B. = Cr/SiO₂/Al), das unter Vakuum beispielsweise mittels Elektronenstrahlverdampfung aufgedampft wird. Diese Bedampfungsprozesse sind vergleichsweise teuer, zumal die unterschiedlichen Schichten oft auch in jeweils separaten Arbeitsgängen aufgebracht werden müssen. Besonders hoch wird der Aufwand, wenn beispielsweise für die Herstellung entsprechender Effektpigmente sogar eine beidseitige Beschichtung nötig ist.

Ferner ist es bekannt, Farbwechsel durch cholesterische Flüssigkristalle zu erzeugen. Diese sind jedoch vergleichsweise lichtschwach und meist nur vor einem dunklen Hintergrund ausreichend sichtbar.

Ausgehend hiervon ist es daher Aufgabe der Erfindung, ein optisch variables Flächenmuster der eingangs genannten Art so weiterzubilden, dass es betrachtungswinkelabhängig wechselnde Farben bereitstellt und kostengünstig hergestellt werden kann.

Erfindungsgemäß wird die Aufgabe durch ein optisch variables Flächenmuster mit den Merkmalen des Anspruchs 1 oder durch ein optisch variables Flächenmuster mit den Merkmalen des Anspruchs 2 gelöst.

Durch die Reflexionselemente wird Licht, das auf das optisch variable Flächenmuster zur Beleuchtung fällt, in die entsprechenden Reflexionsrichtungen reflektiert, so dass bei Betrachtung des Flächenmusters unter dem entsprechenden Betrachtungswinkel (der der Reflexionsrichtung zugeordnet werden kann) eine sehr viel größere Helligkeit vorliegt im Vergleich zu einer Betrachtung unter anderen Betrachtungswinkeln. Wenn nun der Betrachtungswinkel geändert wird, findet für den Betrachter praktisch ein Aufleuchten bei dem entsprechenden Betrachtungswinkel statt, so dass er dann die Farbe des entsprechenden Teilbereiches quasi aufleuchten sieht. Die Farbe des nicht aufleuchtenden Teilbereiches nimmt ein Betrachter kaum oder nur gering wahr. Somit wird dem Betrachter der gewünschte Farbwechseleffekt bereitgestellt, wobei das erfindungsgemäße optisch variable Flächenmuster kostengünstig hergestellt werden kann. Es sind keine aufwendigen Interferenzbeschichtungen notwendig. Es ist ausreichend, wenn der erste Teilbereich mit der ersten lasierenden Farbschicht bedeckt ist.

Gemäß den Ansprüchen 1 und 2 ist der zweite Teilbereich mit einer zweiten lasierenden Farbschicht bedeckt, die sich von der ersten lasierenden Farbschicht im Farbton unterscheidet.

Damit ist es möglich, die Farben, mit denen die Teilbereiche aufleuchten, frei einzustellen.

Gemäß den Ansprüchen 1 und 2 sind die Reflexionselemente so ausgebildet, dass sie achromatisch reflektieren. Somit kann die Farbe, in der der entsprechende Teilbereich aufleuchtet, nur mittels der lasierenden Farbschicht eingestellt werden.

Gemäß dem Anspruch 1 ist zumindest ein weiterer Teilbereich mit Reflexionselementen vorgesehen, der mit einer weiteren lasierenden Farbschicht bedeckt ist, wobei die Reflexionselemente des weiteren Teilbereiches so orientiert sind, dass der Betrachter, wenn der Betrachtungswinkel geändert wird, bei Erreichen eines weiteren Betrachtungswinkels den weiteren Teilbereich in einer von der ersten und/oder zweiten Farbe verschiedenen Farbe leuchten sieht. Dies führt zu einem eindrucksvollen optischen Effekt.

Insbesondere kann eine Vielzahl von weiteren Teilbereichen mit weiteren lasierenden Farbschichten vorgesehen sein, so dass beliebige Farbwechselfolgen bei Änderungen des Betrachtungswinkels realisiert werden können. Ferner ist es möglich, dass quasi kontinuierliche Farbwechsel erreicht werden.

Die lasierenden Farbschichten können so ausgebildet sein, dass sie jeweils nur den Teilbereich bedecken, dem sie zugeordnet sind. Es ist jedoch auch möglich, dass sie sich zumindest teilweise über zumindest einen anderen Teilbereich erstrecken.

Gemäß dem Anspruch 1 ist das optisch variable Flächenmuster so ausgebildet, dass eine Abfolge der Farben der beim Ändern des Betrachtungswinkel nacheinander leuchtenden Teilbereiche einen Farbwechsel in die und/ oder aus der Farbe Weiß enthält.

Ferner kann das optisch variable Flächenmuster einen Referenzbereich aufweisen, der unter den entsprechenden Betrachtungswinkeln der Teilbereiche stets in derselben Farbe leuchtet. Dabei kann der Referenzbereich eine lasierende Farbschicht aufweisen. Es ist jedoch auch möglich, eine sonstige Farbe und insbesondere eine sonstige Druckfarbe einzusetzen.

Ferner kann das optisch variable Flächenmuster so ausgebildet sein, dass für den Betrachter, wenn der Betrachtungswinkel geändert wird, die Teilbereiche so nacheinander leuchten, dass eine Bewegung eines Motives nachgestellt ist, wobei zumindest ein Teil des Motivs nacheinander in den entsprechenden Farben der Teilbereiche leuchtet. Während der Bewegung kann das Motiv seine Form und Größe beibehalten. Es ist jedoch auch möglich, dass sich seine Form und/oder Größe ändert. Somit sind z.B. auch Pumpeffekte und Morphingeffekte realisierbar.

Das optisch variable Flächenmuster kann so ausgebildet sein, dass ein Teil des Motivs bei Betrachtung unter den entsprechenden Betrachtungswinkeln der Teilbereiche stets in derselben Farbe leuchtet. Natürlich ist es auch möglich, dass das gesamte Motiv nacheinander in den entsprechenden Farben der Teilbereiche leuchtet.

Das optisch variable Flächenmuster kann ferner so ausgebildet sein, dass der erste und zweite Teilbereich so ineinander verschachtelt sind, dass sich dem Betrachter ein scheinbar einheitlicher Bereich darbietet, der bei Betrachtung unter dem ersten Betrachtungswinkel in der ersten Farbe und bei Betrachtung unter dem zweiten Betrachtungswinkel in der zweiten Farbe leuchtet. Es ist ferner möglich, dass der scheinbar einheitliche Bereich mehr als zwei Teilbereiche mit unterschiedlichen Farben aufweist, wobei die Teilbereiche so ineinander verschachtelt sind, dass sich dem Betrachter ein scheinbar einheitlicher Bereich darbietet, der dann bei Betrachtung unter den unterschiedlichen Betrachtungswinkeln der entsprechenden Teilbereiche jeweils mit unterschiedlichen Farben leuchtet.

Gemäß dem Anspruch 1 sind bei dem optisch variablen Flächenmuster die Reflexionselemente durch Reliefstrukturen mit strahlenoptisch wirkenden reflektierenden Facetten gebildet. Dies kann beispielsweise durch Prägung einer entsprechenden Schicht, insbesondere einer thermoplastischen oder strahlungshärtenden Lackschicht, realisiert sein. Die reflektierenden Facetten können durch Beschichtung mit einer reflexionserhöhenden Beschichtung, insbesondere einer metallischen Beschichtung (wie z.B. Al, Cr, Ag, Cu, Au), einer Legierung und/ oder einer hochbrechenden Beschichtung, gebildet sein.

Gemäß dem Anspruch 1 sind die reflektierenden Facetten, die auch als Mikrospiegel bezeichnet werden können, als regelmäßige Sägezahngitter ausgebildet. Die Facettengröße liegt bevorzugt zwischen 3 µm und 300 µm, insbesondere zwischen 3 µm und 50 µm und besonders bevorzugt zwischen 5 µm und 20 µm.

Als Reflexionselemente können auch rinnen- oder rippenförmige Strukturen, insbesondere konkave oder konvexe Zylinderflächenausschnitte, verwendet werden, die einfallendes Licht um ihre Längsrichtung herum auffächern. Damit können verschiedene Teilbereiche beispielsweise bei Rotation des Flächenmusters in seiner Ebene aus unterschiedlichen Winkeln hell aufleuchten. Somit ließen sich beispielsweise auch die in der WO2012/069163A1 für Retroreflektoren beschriebenen Laufeffekte mit geeigneten lasierenden Farben statt einer Interferenzbeschichtung erzeugen. Typische Strukturgrößen können auch hier z.B. zwischen 2 µm und 300 µm, bevorzugt zwischen 3 µm und 50 µm und besonders bevorzugt zwischen 5 µm und 20 µm liegen.

Ferner können bei dem optisch variablen Flächenmuster Reflexionselemente aus zumindest einem der Teilbereiche durch beugungsoptisch wirkende reflektive Reliefstrukturen gebildet sein. Die Reliefstrukturen können symmetrisch oder asymmetrisch sein, insbesondere können sie als achromatische Mattstrukturen ausgebildet sein.

Gemäß dem Anspruch 2 sind bei dem optisch variablen Flächenmuster die Reflexionselemente durch ausgerichtete Pigmente einer Druckfarbe realisiert. Dabei ist es möglich, dass die Pigmente metallisierte plättchenförmige Pigmente sind, die beispielsweise magnetisch orientiert sein können. Die Pigmente können auch dadurch orientiert sein, dass sie auf einer entsprechenden Prägestruktur angeordnet sind. Die Pigmente können mit lasierender Farbe überdruckt werden. Es ist möglich, dass die reflektierenden Pigmente direkt in einer ansonsten lasierenden Farbe angeordnet sind. Auch eine Orientierung der Pigmente über Stahlstich ist möglich.

Die Reflexionselemente der Teilbereiche können insbesondere teilreflektiv sein. In diesem Fall kann das optisch variable Flächenmuster auch in Durchsicht verwendet werden.

Insbesondere können in weitergehenden Ausführungen auch verschiedene Farben in Durchsicht bzw. Aufsicht von zwei Seiten verwirklicht werden: Beispielsweise können mit einer semitransparenten Metallisierung oder einer hochbrechenden Beschichtung versehene Reflexionselemente von einer Seite (Vorderseite) gelb und von der anderen Seite (Rückseite) magenta beschichtet sein. Das Reflexionselement leuchtet dann von der Vorderseite gelb und von der Rückseite magenta auf und zeigt in Durchsicht die Mischfarbe Rot. Außerhalb der Reflexionsrichtung der Reflexionselemente kann hier auch ein roter Farbeindruck vorliegen. Natürlich können auch opake Reflexionselemente auf ihrer Vorder- und Rückseite mit unterschiedlichen Farben überdeckt sein.

Bei dem optisch variablen Flächenmuster können Reflexionselemente aus zumindest einem der Teilbereiche durch Reliefstrukturen in einer metallisierten Folie gebildet sein.

Die Farben, die die Teilbereiche für den Betrachter bei Betrachtung des optisch variablen Flächenmusters aufweisen, können unabhängig vom Betrachtungswinkel sein. Daher ist es möglich, eine lasierende Farbschicht vorzusehen, was zu der kostengünstigen Herstellbarkeit des erfindungsgemäßen optisch variablen Flächenmusters beiträgt.

Gemäß dem Anspruch 1 weist die erste lasierende Farbschicht zu den Reflexionselementen des ersten Teilbereiches eine Registergenauigkeit von kleiner als 200 µm, bevorzugt kleiner als 50 µm und besonders bevorzugt kleiner als 10 µm auf. Diese Registergenauigkeit gilt auch für die anderen lasierenden Farbschichten relativ zu den entsprechenden Reflexionselementen der entsprechenden Teilbereiche.

Zur Herstellung des erfindungsgemäßen optisch variablen Flächenmusters mit registerhaltigem bzw. registerhaltig erscheinendem Druck kann beispielsweise ein gefärbter Ätzresist, gegebenenfalls auch mit Schutz einer weiteren Farbe, durch Resist eingesetzt werden, kann zumindest eine Umrandung von Reflexionselementen und Farben gleichzeitig mittels Laserung (vorteilhaft durch Maske) erstellt werden, kann Metall strukturiert werden und als Laser-Maske für lasierende Farbe(n) eingesetzt werden, kann eine laserresistente Farbe als Maske zur Demetallisierung verwendet werden, können Metalltransferverfahren benutzt werden, kann ein Patch mit gewünschten Umrissen des Motivs aus größeren metallisierten und/ oder lasierend überdeckten Bereichen ausgeschnitten werden und/ oder kann eine gerichtete Sublimation einer lasierenden Farbe oder lasierender Farben durchgeführt werden.

Ein Herstellungsverfahren kann insbesondere so weitergebildet werden, dass das erfindungsgemäße optisch variable Flächenmuster (einschließlich seiner Weiterbildungen) hergestellt werden kann.

Das erfindungsgemäße optisch variable Flächenmuster (einschließlich seiner Weiterbildungen) kann als Sicherheitselement, insbesondere als Sicherheitselement für ein Sicherheitspapier, Wertdokument oder dergleichen, eingesetzt werden. Insbesondere wird ein Wertdokument mit einem erfindungsgemäßen optisch variablen Flächenmuster (einschließlich seiner Weiterbildungen) bereitgestellt.

Das optisch variable Flächenmuster kann insbesondere als Sicherheitsfaden, Aufreißfaden, Sicherheitsband, Sicherheitsstreifen, Patch oder als Etikett zum Aufbringen auf ein Sicherheitspapier, Wertdokument oder dergleichen ausgebildet sein. Insbesondere kann das optisch variable Flächenmuster transparente Bereiche oder Ausnehmungen überspannen.

So kann das erfindungsgemäße optisch variable Flächenmuster in einem Fenster oder in einem transparenten Bereich auf einer Polymerbanknote genutzt werden. Von einer Seite erscheint dann das optisch variable Flächenmuster mit dem erfindungsgemäßen Farbwechsel beim Kippen. Von der anderen Seite (Rückseite) sieht der Betrachter dann die Farbe der Metallisierung (beispielsweise Aluminium), wenn eines der Reflexionselemente eine metallisierte Beschichtung aufweist. Natürlich kann das erfindungsgemäße optisch variable Flächenmuster auch so ausgebildet sein, dass die zumindest zwei Teilbereiche auf einer ersten Seite (Vorderseite) des optisch variablen Flächenmusters ausgebildet sind. Auf der Rückseite können dann in gleicher Weise wiederum zumindest zwei Teilbereiche mit Reflexionselementen ausgebildet sein, wie dies auf der Vorderseite ist. Damit sieht man bei Betrachtung der Rückseite des optisch variablen Flächenmusters wiederum den beschriebenen Farbwechseleffekt. Natürlich ist es möglich, dass die Farbwechseleffekte von Vorder- und Rückseite gleich oder verschieden sind.

Die Verwendung des erfindungsgemäßen optisch variablen Flächenmusters bei Polymerbanknoten ist insbesondere aus den folgenden Gründen vorteilhaft. Polymer (z.B. PP) ist besonders hitzeempfindlich. Das Vorsehen von Folienstreifen/Patches ist daher schwieriger als z.B. auf Papier. Ferner gibt es bereits den Prozess, bei dem an der Tiefdruckmaschine Prägelack gedruckt wird, geprägt wird und die erzeugten Hologramme mit einer speziellen Art von Supersilberfarbe überdruckt/metallisiert werden. Das Vorsehen weiterer Druckschichten, wie z.B. einer lasierenden Farbschicht, ist daher leicht möglich. Die lasierenden Farbschichten können hier sowohl auf der gleichen Seite der Banknote (Druck von Prägelack), dann Prägung, dann Supersilber, dann wieder lasierende Farben gedruckt werden, als auch auf der Rückseite (z.B. nach Wendung des Substrates). Dies kann insbesondere in einem Druckgang durchgeführt werden, was vorteilhaft in Bezug auf die Passersituation ist.

Da im Vergleich zu Hologrammen die Flächen der Reflexionselemente groß sind, können mehr Materialien zur Erzeugung der reflektierenden Facetten eingesetzt werden.

Unter dem Begriff Sicherheitspapier wird hier insbesondere die noch nicht umlauffähige Vorstufe zu einem Wertdokument verstanden, die neben dem erfindungsgemäßen optisch variablen Flächenmuster beispielsweise auch weitere Echtheitsmerkmale (wie z.B. im Volumen vorgesehene Lumineszenzstoffe) aufweisen kann. Unter Wertdokumenten werden hier einerseits aus Sicherheitspapieren hergestellte Dokumente verstanden. Andererseits können Wertdokumente auch sonstige Dokumente und Gegenstände sein, die mit dem erfindungsgemäßen optisch variablen Flächenmuster versehen werden können, damit die Wertdokumente nicht kopierbare Echtheitsmerkmale aufweisen, wodurch eine Echtheitsprüfung möglich ist und zugleich unerwünschtes Kopieren verhindert wird.

Nachfolgend wird die Erfindung beispielshalber anhand der beigefügten Figuren, die auch erfindungswesentliche Merkmale offenbaren, noch näher erläutert. Zur besseren Anschaulichkeit wird in den Figuren auf eine maßstabs- und proportionsgetreue Darstellung und auf Schraffuren verzichtet. Es zeigen:
- Fig.1: eine Draufsicht einer Banknote mit einem erfindungsgemäßen optisch variablen Flächenmuster 10;
- Fig. 2: eine vergrößerte Schnittdarstellung des optisch variablen Flächenmusters 10 von Fig.1;
- Fig. 3: eine vergrößerte Schnittdarstellung einer Abwandlung des optisch variablen Flächenmusters 10 gemäß Fig. 2;
- Fig. 4: eine vergrößerte Schnittdarstellung einer Abwandlung des optisch variablen Flächenmusters 10 von Fig. 2;
- Fig. 5: eine Draufsicht eines Beispiels der Ineinanderschachtelung der beiden Teilbereiche 17 und 18 des erfindungsgemäßen optisch variablen Flächenmusters;
- Fig. 6: eine Draufsicht eines Beispiels der Ineinanderschachtelung der beiden Teilbereiche 17 und 18 des erfindungsgemäßen optisch variablen Flächenmusters;
- Fig. 7: eine vergrößerte Schnittdarstellung einer weiteren Ausführungsform des optisch variablen Flächenmusters 10 von Fig. 1;
- Fig. 8: eine Draufsicht einer weiteren Ausführungsform des erfindungsgemäßen optisch variablen Flächenmusters 10;
- Fig. 9: eine Schnittansicht eines Teils des optisch variablen Flächenmusters von Fig. 8;
- Fig.10: eine Schnittansicht eines Teils des optisch variablen Flächenmusters 10 von Fig. 8;
- Fig. 11: eine Schnittansicht einer Ausführungsform des optisch variablen Flächenmusters 10 zur Erläuterung eines ersten Herstellungsverfahrens, und
- Fig. 12: eine Schnittansicht einer Ausführungsform des optisch variablen Flächenmusters 10 zur Erläuterung eines zweiten Herstellungsverfahrens.

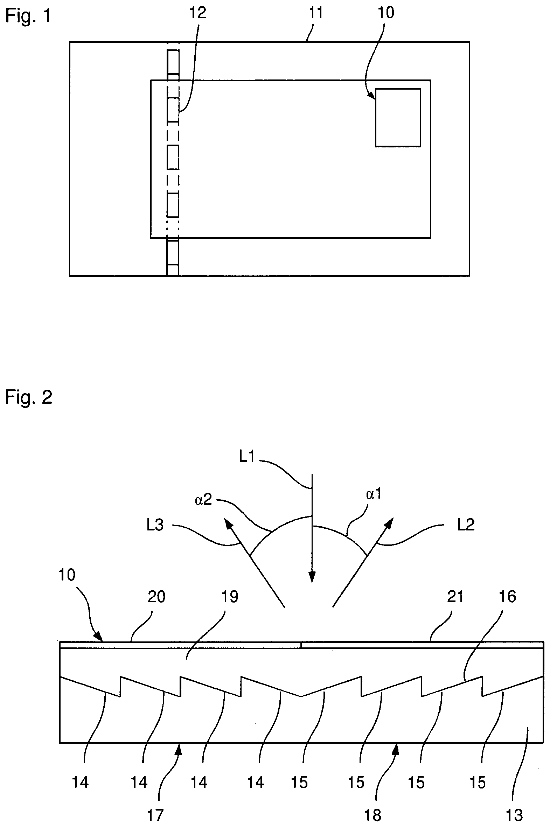

Bei der in Fig.1 gezeigten Ausführungsform ist das erfindungsgemäße optisch variable Flächenmuster als Sicherheitselement so in einer Banknote 11 integriert, dass es in der in Fig.1 gezeigten Vorderseite der Banknote sichtbar ist. Alternativ kann das erfindungsgemäße optisch variable Flächenmuster 10 z.B. als Fensterfaden 12 vorliegen.

Wie der vergrößerten Schnittdarstellung des optisch variablen Flächenmusters 10 in Fig. 2 entnommen werden kann, weist das Flächenmuster 10 eine Prägelackschicht 13 (z.B. thermoplastisch oder strahlungshärtend) auf, auf deren Oberseite erste Facetten 14 und zweite Facetten 15 ausgebildet sind, wobei die ersten Facetten 14 eine erste Orientierung und die zweiten Facetten 15 eine zweite Orientierung, die verschieden zur ersten Orientierung ist, aufweisen. Auf den Facetten 14,15 ist eine reflektierende Beschichtung 16 (insbesondere eine Metallisierung) aufgebracht, so dass die Facetten 14 und 15 als reflektive Facetten ausgebildet sind. Die ersten Facetten 14 bilden einen ersten Teilbereich 17 und die zweiten Facetten 15 bilden einen zweiten Teilbereich 18 des Flächenmusters 10.

Auf den Facetten 14,15 ist eine transparente Zwischenschicht 19 aufgebracht, deren den Facetten 14,15 abgewandte Oberseite plan ausgebildet ist. Auf der Oberseite der Zwischenschicht 19 ist im ersten Teilbereich eine erste lasierende Farbschicht 20 (beispielsweise der Farbe Rot) und im zweiten Teilbereich 18 eine zweite lasierende Farbschicht 21 (beispielsweise der Farbe Grün) aufgebracht. Man kann auch sagen, dass die Oberseite der transparenten Zwischenschicht 19 im ersten Teilbereich 17 mit einer ersten lasierenden Farbe und im zweiten Teilbereich 18 mit einer zweiten lasierenden Farbe überzogen ist.

Aufgrund der unterschiedlichen Orientierungen der ersten und zweiten Facetten 14 und 15 erscheint eine Lichtquelle (einfallendes Licht L1) in Abhängigkeit des entsprechenden Teilbereiches 17,18 unter unterschiedlichen Betrachtungswinkeln α1, α2. So wird das einfallende Licht L1 von den ersten Facetten 14 in die Richtung L2 reflektiert, wohingegen das einfallende Licht L1 von den zweiten Facetten 15 in die Richtung L3 reflektiert wird.

Somit leuchtet der erste Teilbereich 17 des optisch variablen Flächenmusters 10 für einen Betrachter in roter Farbe hell auf, wenn der Betrachter das optisch variable Flächenmuster 10 unter dem ersten Betrachtungswinkel α1 bei einer Einfallsrichtung des Beleuchtungslichtes gemäß Pfeil L1 ansieht. Dies ist darin begründet, dass in diesem Fall die Betrachtungsrichtung mit dem Spiegelreflex der ersten Facetten 14 zusammenfällt. Wenn der Betrachter das optisch variable Flächenmuster 10 unter dem zweiten Betrachtungswinkel α2 ansieht, leuchtet der zweite Teilbereich 18 für ihn in grüner Farbe hell auf, da in diesem Fall die Betrachtungsrichtung mit dem Spiegelreflex der zweiten Facetten 15, wenn diese mit dem einfallenden Licht L1 beleuchtet werden, zusammenfällt.

Überraschenderweise hat sich gezeigt, dass die Farbe der jeweils dunklen Facetten 14,15 praktisch nicht auffällt und ein Betrachter im Wesentlichen nur die Farbe der gerade hell aufleuchtenden Facetten 15,14 wahrnimmt.

Die Betrachtung des optisch variablen Flächenmusters unter den zwei unterschiedlichen Betrachtungswinkeln α1, α2 kann dadurch durchgeführt werden, dass der Betrachter seine Position ändert und/ oder dass das optisch variable Flächenmuster 10 entsprechend gekippt wird.

Die Dicke der beiden Farbschichten 20, 21 ist bevorzugt gleich und kann beispielsweise im Bereich von 0.1 µm bis 6 µm, vorzugsweise 0.6 µm bis 2 µm liegen.

In einer weiteren Abwandlung kann als lasierende Schicht die Prägelackschicht 13 selbst eingesetzt werden, wobei diese in den Teilbereichen 17 und 18 unterschiedlich eingefärbt ist. Das Flächenmuster wäre dann von der anderen Seite, also durch den Prägelack hindurch, zu betrachten.

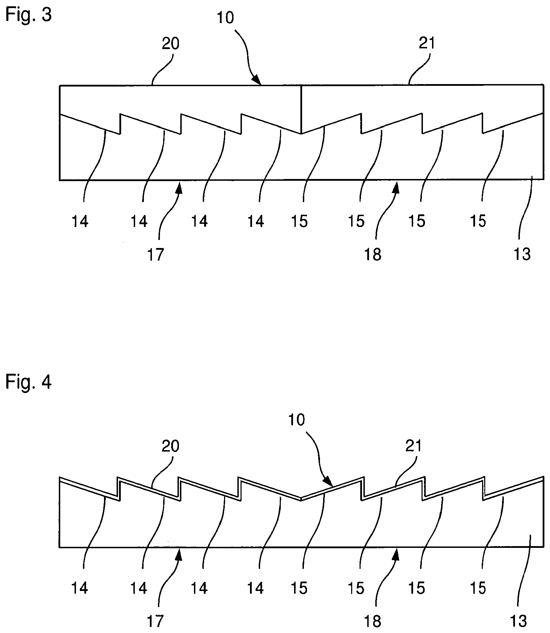

In einer in Fig. 3 gezeigten Abwandlung des optisch variablen Flächenmusters 10 ist die transparente Zwischenschicht 19 nicht vorgesehen. Stattdessen sind die Facetten 14,15 der beiden Teilbereiche 17,18 komplett in die beiden Farbschichten 20, 21 eingebettet.

In Fig. 4 ist eine Abwandlung des optisch variablen Flächenmusters 10 gezeigt, bei dem die beiden Farbschichten 20, 21 mit einer Dicke gemäß der Ausführungsform von Fig. 2 direkt auf den Facetten 14,15 ausgebildet sind.

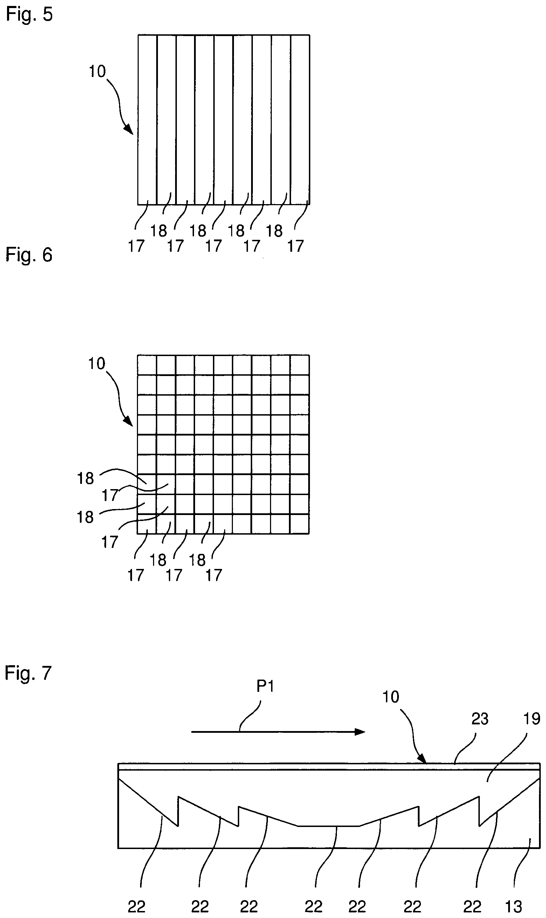

Ferner kann das optisch variable Flächenmuster gemäß Fig. 2, 3 und/ oder 4 z.B. so ausgebildet sein, dass es mehrere erste und zweite Teilbereiche 17,18 aufweist, die fein ineinander verschachtelt sind. So können die Teilbereiche 17 und 18 beispielsweise als schmale Streifen mit einer Breite von z.B. 100 µm ausgebildet sein, die abwechselnd angeordnet sind (Fig. 5). Die Streifen können eine oder mehrere erste bzw. zweite Facetten 14,15 aufweisen. Natürlich ist auch jede andere Art des Ineinanderverschachtelns möglich. So kann z.B. eine schachbrettartige Verschachtelung vorliegen (Fig. 6).

Ein Betrachter kann die Struktur dieser Verschachtelung mit unbewaffnetem Auge nicht mehr auflösen, so dass er das gesamte optisch variable Flächenmuster 10 unter dem ersten Betrachtungswinkel α1 hellrot aufleuchten und unter dem zweiten Betrachtungswinkel α2 hellgrün aufleuchten sieht.

Dieser Effekt ist vergleichbar mit dem Bild eines Farbmonitors, das meist aus roten, grünen und blauen Subpixeln zusammengesetzt ist. Beim Farbmonitor wird ein Farbwechsel von Rot nach Grün durch Ausschalten der roten und Einschalten der grünen Pixel realisiert. Bei dem erfindungsgemäßen optisch variablen Flächenmuster werden die roten Reflexionselemente (erste Facetten 14 mit der ersten lasierenden Farbschicht 20) aus ihrer Reflexionsrichtung herausgeführt und somit dunkel, während die grünen Reflexionselemente (zweite Facetten 15 mit der zweiten lasierenden Farbschicht 21) in die entsprechende Reflexionsrichtung hineingedreht und somit für den Betrachter hell werden.

In Fig. 7 ist schematisch eine Ausführungsform des erfindungsgemäßen optisch variablen Flächenmusters 10 gezeigt, bei der sich die Orientierung der Facetten 22, die in gleicher Weise wie bei den bisher beschriebenen Ausführungsformen als reflektierende Facetten 22 ausgebildet sind, schrittweise ändert, wie in Fig. 7 dargestellt ist. Auf der transparenten Zwischenschicht 19 ist eine lasierende Farbschicht 23 aufgebracht, die entlang der Richtung des Pfeiles P1 einen Farbverlauf aufweist.

Wenn ein Betrachter die erste Facette 22 ganz links in Fig. 7 hell aufleuchten sieht und dann das optisch variable Flächenmuster 10 kippt, wandert für den Betrachter der wahrnehmbare Lichtreflex, da für den Betrachter nacheinander die Lichtreflexe der Facetten 22 von links nach rechts gemäß Fig. 7 aufleuchten. Für den Betrachter ist somit ein wandernder Lichtreflex sichtbar, der gleichzeitig seine Farbe ändert, da aufgrund der lasierenden Farbschicht 23 jeder Facette 22 eine andere Farbe für den Lichtreflex zugeordnet ist. So kann beispielsweise ein Farbverlauf von Rot über Orange, Gelb bis zu Grün realisiert sein. Es ist jedoch auch jeder andere Farbverlauf möglich. Insbesondere können Farben auch mehrmals vorkommen.

Bei der in Fig. 7 gezeigten Ausführungsform weist das optisch variable Flächenmuster 10 somit sieben Teilbereiche auf (obwohl jeder Teilbereich hier eine schematisch gezeigte Facette 22 aufweist, können auch mehrere Facetten 22 pro Teilbereich vorgesehen sein), die jeweils mit einer unterschiedlichen Farbe der Farbschicht 23 und somit einem Teil der Farbschicht 23 bedeckt sind. Man kann daher jedem Teil der Farbschicht 23, der einem der Teilbereiche zugeordnet ist, selbst als lasierende Farbschicht bezeichnen. Es sind somit bei der beschriebenen Ausführungsform sieben lasierende Farbschichten vorgesehen, die zusammen die Farbschicht 23 bilden.

Natürlich können sehr viel mehr Facetten und unterschiedliche Winkel realisiert werden, als in der schematischen Darstellung in Fig. 7 gezeigt sind. Je mehr Facetten mit unterschiedlichen Orientierungen vorgesehen werden, umso kontinuierlicher erscheint der durch die unterschiedlichen Orientierungen der Facetten nachgestellte Bewegungseffekt.

Insbesondere können die Orientierungen der Facetten 22 eine (quasi) zufällige Komponente aufweisen, wie dies in der DE 10 2010 047 250 A1 beschrieben ist. Wesentlich ist, dass sich die Mittelwerte der Orientierungen der Facetten 22 in der gewünschten Weise (bevorzugt kontinuierlich bzw. quasikontinuierlich) ändern.

So lässt sich beispielsweise der in DE 10 2010 047 250 A1 beschriebene "Rolling Bar"-Effekt durch das Vorsehen von lasierenden Farbschichten mit einem Farbwechsel kombinieren, der dem Farbwechsel durch Beschichtung der Facetten mit einem Dünnfilm-Interferenzschichtsystem aus Absorber/Dielektrikum/Reflektor überraschend ähnlich sieht. Jedoch ist es bei dem erfindungsgemäßen optisch variablen Flächenmuster 10 möglich, einen Farbwechsel bereitzustellen, der mit einer Interferenzbeschichtung nicht möglich ist. So ist ein Farbwechsel durch Interferenzbeschichtungen dadurch beschränkt, dass sich z.B. das Spektrum beim Kippen aus der senkrechten Aufsicht hinaus in der Regel in den kurzwelligen Bereich verschiebt. Somit ist beispielsweise ein Farbwechsel von Grün nach Blau, aber nicht umgekehrt von Blau nach Grün möglich. Ein solcher Farbwechsel von Blau nach Grün ist mit dem erfindungsgemäßen optisch variablen Flächenmuster problemlos realisierbar. Ferner kann der Farbverlauf bei dem erfindungsgemäßen optisch variablen Flächenmuster 10 in oder aus Weiß laufen (Weiß wird hier auch als Farbe verstanden). Außerdem kann die Farbe nicht nur von einer ersten in eine zweite Farbe wechseln, sondern kann z.B. auch mehrere Farben durchlaufen, beispielsweise von Gelb über Grün nach Rot oder von Blau zu Grün und wieder zurück zu Blau. Ein Farbverlauf mit den lasierenden Farbschichten kann somit von einer beliebigen ersten Farbe in eine beliebige zweite Farbe laufen und gegebenenfalls in zumindest eine dritte Farbe verlaufen, wobei die dritte Farbe verschieden zur ersten und zweiten Farbe oder z.B. gleich mit der ersten Farbe sein kann.

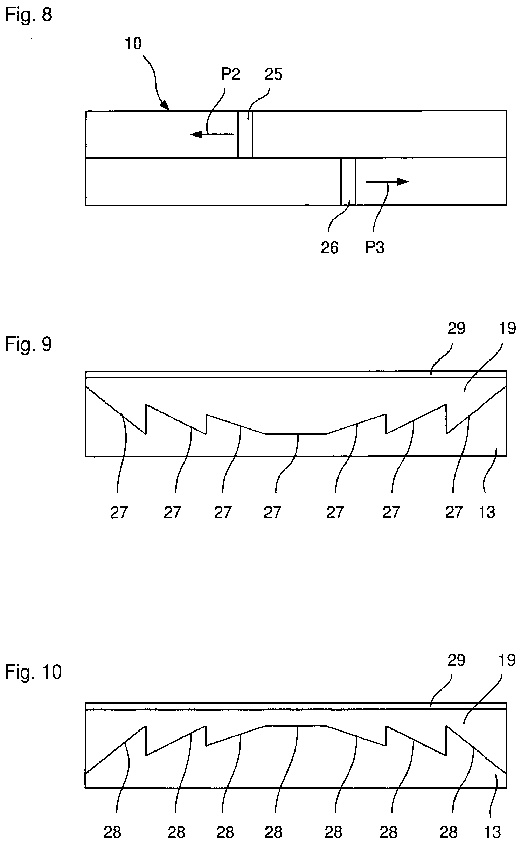

Bei der in Fig. 8 gezeigten Ausführungsform des optisch variablen Flächenmusters wird ein gegenläufiger Laufeffekt bereitgestellt, bei dem ein erster Balken 25 scheinbar nach links läuft (Pfeil P2) und ein zweiter Balken 26 gleichzeitig scheinbar nach rechts läuft (Pfeil P3), wenn der Betrachter seinen Betrachtungswinkel ändert.

Die Anordnung der Facetten 27 für das scheinbare Bewegen des ersten Balkens 25 ist in Fig. 9 dargestellt. Die Anordnung der Facetten 27 für das scheinbare Bewegen des zweiten Balkens 26 ist in Fig. 10 dargestellt. Die Facetten 27, 28 können in gleicher Weise wie die bereits beschriebenen Facetten 14, 15, 22 ausgebildet sein. Auf den Facetten 27,28 für beide Balken 25 und 26 ist wiederum eine lasierende Farbschicht aufgebracht, die einen Farbverlauf von der Farbe Cyan von links in Fig. 8 bis nach rechts zur Farbe Gelb aufweist. Der Farbverlauf kann so gewählt sein, dass in der Mitte die Farbe Grün vorliegt. Ein Betrachter sieht somit also zwei Balken 25 und 26, die aus einer bestimmten Blickrichtung zunächst beide in der Mitte stehen und grün erscheinen. Beim Kippen läuft dann der obere Balken 25 nach links und wird cyan, während der untere Balken 26 nach rechts läuft und gelb wird. Dadurch erhält man ein sehr dynamisches Erscheinungsbild mit Bewegung der Balken 25 und 26 sowie deutlichen Farbänderungen.

Damit erscheint das erfindungsgemäße Flächenmuster 10 sehr bunt und dynamisch.

Es ist jedoch auch möglich, die Facetten 27, 28 für jeden der beiden Balken 25 und 26 vollflächig mit zwei unterschiedlich lasierenden Farben zu überdecken, so dass der erste Balken 25 stets eine erste Farbe und der zweite Balken 26 stets eine zweite Farbe aufweist.

Neben den beschriebenen Bewegungseffekten ist dem Fachmann natürlich eine Vielzahl von weiteren dynamischen Effekten bekannt, die in Verbindung mit einer entsprechenden lasierenden Beschichtung (oder mehreren lasierenden Beschichtungen) kombiniert werden können. So kann beispielsweise ein Pumpeffekt erzeugt werden, bei dem beim Kippen des optisch variablen Flächenmusters z.B. die Umrisse einer Wertzahl nach außen pumpen (also größer werden) und dabei die Farbe wechseln. Auch Darstellungen mit Formänderungen (Morphingeffekte) sind mit wechselnden Farben möglich.

Ferner ist es möglich, Bereiche ohne Farbwechsel als eine Art Farbreferenz vorzusehen, um den Farbwechseleffekt zu betonen. So kann z.B. einer der beiden Balken 25, 26 halbseitig einen Farbverlauf (beispielsweise Gelb-Grün) aufweisen und auf der anderen Seite vollständig mit einer in dem Farbverlauf vorkommenden Farbe (z.B. Gelb) überdeckt sein. Der Balken wäre somit unter einem ersten Betrachtungswinkel an einer ersten Position vollständig gelb und würde bei Bewegung dann auf einer Hälfte gelb bleiben und auf der anderen Hälfte zu Grün kippen. Durch eine solche Referenzfarbe wird ein solcher Farbwechsel sehr früh und gut sichtbar. Eine solche Referenzfarbe kann auch durch eine beliebige andere und nicht zwangsweise lasierende Druckfarbe gegeben sein und muss natürlich nicht unbedingt ebenfalls einen Bewegungseffekt aufweisen.

Bei den bisher beschriebenen Ausführungsformen des erfindungsgemäßen optisch variablen Flächenmusters 10 wurde stets von reflektierenden Facetten 14,15, 22, 27 und 28 ausgegangen. Es müssen jedoch keine reflektierenden Facetten 14,15, 22, 27 und 28 sein, sondern es können im Allgemeinen Reflexionselemente sein, wobei betrachtungswinkelabhängig unter verschiedenen Winkeln von diesen Reflexionselementen unterschiedliche Reflexionselemente in dem durch die entsprechende lasierende Farbe bestimmten Farbton hell aufleuchten.

Es handelt sich somit bei dem erfindungsgemäßen Flächenmuster 10 nicht um einen echten Farbwechsel, sondern um einen scheinbaren Farbwechsel. Unter einem echten Farbwechsel ist ein Farbwechsel zu verstehen, wie er beispielsweise mit einer Dünnfilmbeschichtung realisiert werden kann, bei dem jedes einzelne die Dünnfilmbeschichtung aufweisende Reflexionselement aus unterschiedlichen Richtungen in einer unterschiedlichen Farbe erscheint. Bei den erfindungsgemäßen optischen variablen Flächenmustern 10 liegt jedoch der scheinbare Farbwechsel in der Art vor, dass für den Betrachter zwar unterschiedliche Farben hell aufleuchten. Tatsächlich bleibt jedoch ein lasierend blau beschichtetes Reflexionselement bei Betrachtung aus allen Richtungen blau und bleibt ein lasierend rot beschichtetes Reflexionselement aus allen Richtungen betrachtet rot. Da sich bei dem erfindungsgemäßen optisch variablen Flächenmuster 10 die reflektierte Helligkeit allerdings stark ändert, nimmt ein Betrachter praktisch nur oder hauptsächlich die Farbe bzw. Farben der jeweils hellen Reflexionselemente wahr. Die Tatsache, dass die Farben der anderen Reflexionselemente auch noch vorhanden sind, tritt für den Betrachter deutlich in den Hintergrund oder wird sogar vom Betrachter nicht mehr bemerkt. Die Farben sind somit ortsfest und es ändert sich nur die entsprechende Helligkeit.

Die Reflexionselemente reflektieren bevorzugt im Wesentlichen achromatisch, d.h. praktisch weiß. Dies hat den Vorteil, dass sich mit der lasierenden Farbschicht praktisch jeder beliebige Farbton erzielen lässt. Jedoch können die Reflexionselemente auch selbst eine gewisse Farbigkeit aufweisen, wie sie beispielsweise durch eine goldfarbene Metallisierung realisiert sein kann. In diesem Fall kann beispielsweise durch Überdruck mit lasierendem Blau ein grüner Farbeindruck erzielt werden. Ein Farbwechsel Gold-Grün lässt sich somit auch mit nur einer lasierenden Farbe bzw. mit nur einer lasierenden Farbschicht erzielen.

Die Reflexionselemente können durch Reliefstrukturen gegeben sein, die in einen Prägelack (z.B. thermoplastisch oder strahlungshärtend) abgeformt sind und mit einer reflektierenden oder zumindest reflexionserhöhenden Beschichtung versehen sind. Diese Beschichtung kann insbesondere durch eine Metallisierung gegeben sein (z.B. Aufdampfen eines Metalles, wie Cr, Al, Cu, Au, Ag, oder einer Legierung). Alternativ kann z.B. auch eine hochbrechende dielektrische Beschichtung aufgebracht sein, wodurch sich insbesondere durchsichtige Varianten des erfindungsgemäßen optisch variablen Flächenmusters 10 realisieren lassen. Eine solche durchsichtige Variante kann beispielsweise in einem transparenten Bereich, wie z.B. in einem Banknotenfenster, vorgesehen werden.

Vorteilhaft wäre z.B. eine vergleichsweise dünne hochbrechende Schicht, z.B. eine 40 nm dicke TiO₂-Schicht, die noch vergleichsweise kostengünstig aufgedampft werden kann und im Wesentlichen achromatisch reflektiert. Ferner ist es möglich, eine Beschichtung, die einen echten Farbwechsel erzeugt, vollflächig oder bereichsweise aufzubringen (z.B. durch eine Bedampfung mit Absorber/Dielektrikum/Reflektor), so dass interessante Kombinationen von einem echten Farbwechsel und dem erfindungsgemäßen scheinbaren Farbwechsel erzeugt werden können.

Die Reliefstrukturen können durch (bevorzugt im Wesentlichen) strahlenoptisch wirkende Facetten bzw. Mikrospiegel realisiert sein. Die Abmessungen dieser Facetten bzw. Mikrospiegel können zwischen 2 µm und 300 µm, bevorzugt zwischen 3 µm und 50 µm und besonders bevorzugt zwischen 5 µm und 20 µm liegen. Die Facetten bzw. Mikrospiegel können unregelmäßig mit (quasi) zufälligen Variationen angeordnet sein oder als regelmäßige Anordnung Sägezahngitter bilden.

Alternativ zu solchen Facettenstrukturen können auch beugungsoptisch wirkende Reflexionselemente benutzt werden, die vorteilhaft achromatisch erscheinen (z.B. Mattstrukturen). Die zugehörigen Reliefstrukturen können ein symmetrisches oder asymmetrisches Profil (Sägezahngitter) aufweisen. Mit asymmetrischen Beugungsstrukturen lassen sich vorteilhaft höhere Beugungseffizienzen erreichen.

Ferner können die Reflexionselemente auch durch reflektierende Pigmente einer Druckfarbe gegeben sein. Vorteilhaft sind plättchenförmige Pigmente, die zumindest eine spiegelnde metallische Schicht aufweisen. Die Orientierung der Pigmente kann beispielsweise durch Ablagerung auf entsprechende Reliefstrukturen erfolgen. Eine andere vorteilhafte Variante besteht darin, magnetische Pigmente zu verwenden und diese magnetisch auszurichten, wie es beispielsweise auch bei der Druckfarbe SPARK der Schweizer Firma SICPA HOLDING SA gemacht wird. Im Gegensatz zu SPARK werden die Pigmente erfindungsgemäß aber nicht mit einer farbkippenden Beschichtung versehen, sondern mit lasierenden Farben (insbesondere bereichsweise mit unterschiedlichen lasierenden Farben) überdeckt. Es kann beispielsweise eine lasierende Farbe einfach über die Farbe mit den reflektierenden Pigmenten gedruckt werden. Besonders vorteilhaft können die reflektierenden Pigmente alternativ direkt in eine ansonsten lasierende bunte Farbe eingebracht werden.

Eine weitere Alternative zur Herstellung der Reflexionselemente liegt in der Prägung in eine metallisierte Schicht, insbesondere durch Stahlstich in eine metallisierte Folie oder in eine Druckfarbe mit plättchenförmigen metallischen Pigmenten, die beispielsweise vorab im Siebdruck aufgebracht sein kann.

Die lasierende Farbschicht bzw. die lasierenden Farbschichten des optisch variablen Flächenmusters kann bzw. können mittels weitgehend beliebigen Druckverfahren aufgebracht werden, beispielsweise mittels Offsetdruck, Tiefdruck, Flexodruck oder Digitaldruck, insbesondere Inkjet. Im Digitaldruck ist auch eine Individualisierung möglich, beispielsweise der Druck einer fortlaufenden Nummerierung, die im Allgemeinen aber nicht mit den Orientierungen der Prägestrukturen korrelieren muss.

Die lasierende Beschichtung kann auch zusätzliche Sicherheitsmerkmale aufweisen, wie z.B. Fluoreszenz.

Das erfindungsgemäße optisch variable Flächenmuster kann insbesondere im Banknotenbereich eingesetzt werden. Dabei kann es in Form einer Druckfarbe auf eine Banknote gedruckt werden oder als Folienelement mit geprägten Reliefstrukturen in Form eines Sicherheitsstreifens, Fensterfadens oder Patchs vorliegen. Die Reflexionselemente und die lasierende Farbe (bzw. lasierenden Farben) können bereits zusammen als Folienelement auf dem Banknotensubstrat vorliegen oder beide erste im Banknotendruck erzeugt werden (reflektierende Pigmente z.B. im Siebdruck drucken und magnetisch ausrichten, dann lasierende Farbe darüberdrucken). Auch ist es möglich, dass ein Folienelement zunächst nur die Reflexionselemente (z.B. metallisierte Facettenstrukturen) bereitstellt und der Überdruck mit lasierenden Farben beim Banknotendruck erfolgt (z.B. Offsetdruck).

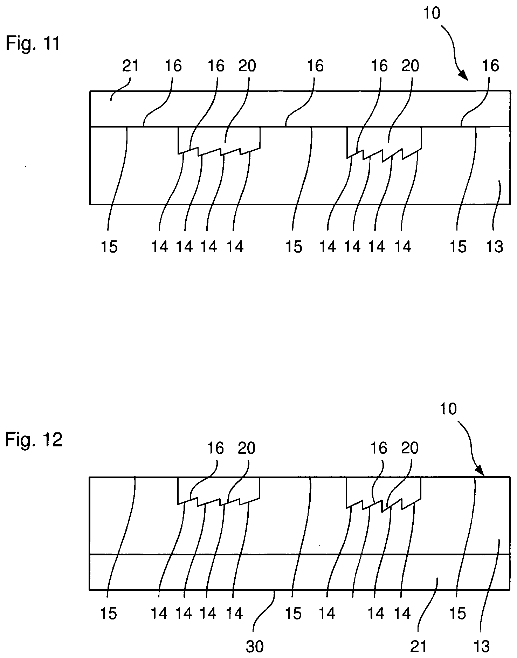

In Verbindung mit Fig. 11 wird ein Verfahren zur Herstellung einer Ausführungsform des optisch variablen Flächenmusters 10 beschrieben, wobei das optisch variable Flächenmuster erste Facetten 14 sowie dazwischen vorgesehene zweite Facetten 15, die auch als Stützstruktur bezeichnet werden können, aufweist.

Zur Herstellung werden in einen Prägelack 13 die ersten Facetten 14 (hier als Sägezahngitter) vertieft geprägt und mit einer reflektierenden Metallisierung 16 beschichtet. Dazwischen befinden sich Stützstrukturen (zweite Facetten 15) ähnlicher Ausdehnung, die durch die Metallisierung 16 ebenfalls verspiegelt werden.

Dann wird eine erste Farbschicht 20 (z.B. Cyan) vollflächig aufgetragen und anschließend abgerakelt, so dass diese Farbe dann nur noch in den Bereichen über den ersten Facetten 14 in den Vertiefungen vorliegt.

Anschließend wird die zweite Farbschicht 21 (z.B. Gelb) vollflächig aufgetragen.

In diesem Fall leuchtet das Flächenmuster 10 im Spiegelreflex der Stützstrukturen 15 also gelb (bzw. gold) auf und im Reflex der ersten Facetten 14 in den Vertiefungen in der Mischfarbe Grün.

Möchte man nicht eine Mischfarbe sehen, sondern zwei völlig unabhängige Farben, so kann man beispielsweise so vorgehen, wie in Fig. 12 skizziert ist.

Es werden wieder die ersten Facetten 14 vertieft geprägt und dazwischen Stützstrukturen 15 angeordnet. Die Prägung wird dann metallisiert. Bei Verwendung eines geeignet präparierten Prägelacks 13 kann dann die Metallisierung von den Stützstrukturen 15 in der Art und Weise entfernt werden, wie es beispielsweise in der Druckschrift DE 10 2010 019 766 A1 beschrieben ist. Dann kann die erste Farbschicht 20 vollflächig aufgetragen und abgerakelt werden. Anschließend wird die zweite Farbschicht 21 auf die Unterseite der Prägung aufgebracht und vorteilhaft mit einer spiegelnden Metallisierung 30 versehen. In der Praxis umfasst die Lackschicht 13 häufig einen transparenten Prägelack und eine nicht gezeigte Trägerfolie. Bei dem gemäß Fig. 12 hergestellten optisch variablen Flächenmuster 10 sieht ein Betrachter im Spiegelreflex der Metallisierung 30 die Farbe der zweiten lasierenden Farbschicht 21 und im Spiegelreflex der ersten Facetten 14 die Farbe der ersten lasierenden Farbschicht 20, wobei die sichtbaren Farben dadurch völlig unabhängig voneinander gewählt werden können.

In einer Abwandlung des in Fig. 12 gezeigten optisch variablen Flächenmusters 10 kann die Metallisierung 30 statt auf einer ebenen Grenzfläche auch auf nicht eben geprägten Reflexionselementen (nicht gezeigt) aufgebracht werden, um den Reflexionswinkel für die Farbe der zweiten lasierenden Farbschicht 21 beliebig wählen zu können.

Alternativ kann auf eine Registrierung auch bewusst verzichtet werden und beispielsweise ein Moire-Effekt ausgenutzt werden. Dazu ordnet man beispielsweise erste und zweite Reflexionselemente 14,15 auf einem vorzugsweise periodischen Raster an. Dann wird das Flächenmuster 10 mit einer ersten Farbschicht und einer zweiten Farbschicht überdruckt. Mindestens eine dieser Farben ist gerastert gedruckt mit einer Rasterweite, die vorzugsweise etwas von der Rasterweite der Reflexionselemente abweicht. Dadurch entsteht ein Moire-Muster, das im Spiegelreflex der Reflexionselemente in den entsprechenden verschiedenen Farben sichtbar wird.

So können beispielsweise die Reflexionselemente in Streifen mit einer Breite von jeweils 100 µm angeordnet sein. Dann wird das Flächenmuster mit einem Linienraster der ersten Farbe (z.B. Magenta) überdruckt, das abwechselnd 110 µm breite Linien und 110 µm breite Zwischenräume aufweist. Anschließend kann die zweite Farbe vollflächig aufgebracht werden (z.B. Gelb). Im Spiegelreflex der ersten Reflexionselemente erscheint durch den Moire-Effekt ein Linienraster mit etwa 2 mm Periode, bei dem in diesem Beispiel gelbe und rote (= Mischfarbe Gelb+Magenta) Linien vorliegen bzw. nahezu kontinuierlich ineinander übergehen. Im Spiegelreflex der zweiten Reflexionselemente erfolgt ein Farbwechsel im Moire-Muster, d.h. die gelben Linien werden rot und die roten Linien werden gelb.

In weitergehenden Varianten können die Raster der Reflexionselemente und/ oder die Raster der lasierenden Farbschichten bereichsweise verschoben werden. Der entsprechende Bereich weist dann auch im Moiré-Muster ein verschobenes Raster auf, so dass die Umrisse dieser Bereiche beispielsweise in Form eines Symbols oder einer Wertzahl sichtbar werden.

Die notwendige Registrierung der Reflexionselemente und der lasierenden Farbschicht(en) zur Ausbildung des optisch variablen Flächenmusters 10 kann mit unterschiedlichen Verfahren erreicht werden. So kann z.B. die lasierende Farbe in Form eines eingefärbten Ätzresists in Form eines Motivs, wie z.B. einer Wertzahl oder eines Symbols, auf großflächig metallisierte (z.B. Al-Metallisierung) Reliefstrukturen aufgebracht werden. Nach anschließender Ätzdemetallisierung liegt nur unter dem Ätzresist die Metallisierung vor, daneben ist die Metallisierung weggeätzt, wodurch die Reliefstrukturen praktisch ihre Reflexionswirkung verlieren. Der lasierende farbige Ätzresist ist nach dem Ätzen dann in perfektem Register zur Metallisierung.

Ferner kann der Ätzresist beim Ätzen nicht nur die Metallisierung sondern auch eine weitere Farbe schützen, die beispielsweise mit größeren Registertoleranzen einen Farbverlauf zeigt. So kann beispielsweise zunächst ein Farbverlauf in einer ersten Farbe (hier Cyanfarbverlauf) relativ großflächig gedruckt werden. Darüber wird mit einem (hier z.B. gelb) eingefärbten Ätzresist das gewünschte Motiv (hier ein Kreis) im Vollton gedruckt. Die erste Farbe ist so gewählt, dass sie an den Stellen, an denen sie nicht mit dem Ätzresist bedeckt ist, beispielsweise von der ohnehin zur Demetallisierung nötigen Ätzlösung oder einem anderen Lösungsmittel entfernt werden kann. Nach der Ätzdemetallisierung erhält man einen kreisförmig metallisierten Bereich, der genau zu den kreisförmigen Umrissen der gelben Farbe bzw. den Umrissen des Farbverlaufs der ersten Farbe im Register steht.

Die Umrisse von Bereichen mit lasierenden Farben können auch mittels Laser genau zu den Umrissen bereichsweise vorliegender Reflexionselemente gepassert werden. Die Reflexionselemente können z.B. durch geprägte Reliefstrukturen gegeben sein, die nur bereichsweise metallisiert sind (z.B. Demetallisierung mit Waschverfahren). Die lasierenden Farben werden dann so gedruckt, dass sie an den Rändern über den metallisierten Bereichen überstehen. Die überstehende Farbe wird dann mit einem Laser entfernt, wobei der metallisierte Bereich als laserresistente Maske dient.

Umgekehrt ist auch eine Demetallisierung durch eine laserresistente lasierend farbige Maske möglich, bei der dann die Umrisse einer Laser-Demetallisierung exakt auf das Druckbild der lasierenden Farbe registriert werden.

Eine weitere laserbasierte Möglichkeit ist es, mittels einer Maske bereichsweise gleichzeitig sowohl das Metall als auch die lasierende Farbe zu beseitigen. Im verbliebenen Bereich sind dann die Ränder der Demetallisierung und der Farbe(n) auch in perfektem Register. Durch Strahlaufweitung und unterschiedliche Ablationsschwellen der Farbe(n) bzw. der Metallisierung kann sich dabei ein schmaler (mit dem unbewaffneten Auge sichtbarer oder auch nicht sichtbarer) Randbereich ergeben, der nur Metall oder nur die Farbe enthält, was als weiteres Echtheitsmerkmal dienen kann.

In vielen Fällen ist es ausreichend, wenn statt einer exakten Registrierung lediglich die Ränder der mit Reflexionselementen bzw. lasierender Farbe bedruckten Bereiche übereinstimmen. Dazu kann beispielsweise durch Druck einer unauffälligen Umrandung mit einer opaken Farbe eine perfekte Registrierung imitiert werden.

So kann z.B. die Wertzahl "50" mit metallisierten Prägestrukturen, mit Rolling Bar-Effekt und Farbverlauf mit zwei lasierenden Farben, mit einer Höhe der Zahl von ca. 10 nm und einer angenommenen Registriergenauigkeit von ± 200 µm realisiert werden. Dabei reicht es völlig aus, die Grenze des demetallisierten Bereichs (beispielsweise durch Waschfarbendruck) auf ± 200 µm auf die Prägestrukturen zu passern, sofern diese neben der verbleibenden Metallisierung noch entsprechend 200 µm weiter das entsprechende Prägemotiv aufweisen (hier verrutscht lediglich die Mittelstellung der Rolling Bar innerhalb der Wertzahl von maximal 200 µm, was nicht auffällt). Anschließend kann die lasierende Farbe mit ± 200 µm Registergenauigkeit zur Demetallisierung auf diesen Bereich gedruckt werden. Je nach Richtung der Schwankung liegen am Rand der Wertzahl nun Bereiche vor, die metallisch farblos aufleuchten (Metallisierung ist vorhanden, aber keine lasierende Farbe) oder lediglich die lasierende Farbe zeigen (nur die Farbe ist vorhanden, aber keine Metallisierung). Dieser Rand kann nun durch eine Umrandung mit einer opaken Farbe überdruckt werden, beispielsweise hier mit ebenfalls wieder ± 200 µm Registergenauigkeit zur Demetallisierung und somit maximal ± 400 µm Registerfehler zur lasierenden Farbe. Mit einer Umrandung der Linienstärke 0,8 mm ließen sich durch die opake Farbe dann die Registerschwankungen vollständig verstecken. Besonders vorteilhaft ist eine Umrandung in der Farbe des Hintergrunds (beispielsweise Weiß bei späterer Applikation auf weißem Papier).

Liegen zwischen den Reflexionselementen und der bzw. den lasierenden Farben Registerschwankungen vor, so kann der äußere Bereich, in dem diese sichtbar sind, auch einfach weggeschnitten werden. Dies ist insbesondere bei einer Patch-Applikation möglich.

Ein direkter Zusammenhang zwischen Ausrichtung der Reflexionselemente und aufgebrachter Farbe kann erzeugt werden, indem man beispielsweise die Farbe sublimiert und gerichtet auf die Reflexionselemente (z.B. Mikrospiegel) auftreffen lässt. Treffen die Farbpartikel etwa senkrecht auf die Reflexionsfläche, so ergibt sich eine vergleichsweise hohe Flächendeckung, während sich beim Auftreffen unter einem flachen Winkel nur eine sehr geringe Flächendeckung ergibt. Damit können sich bei kontinuierlich variierenden Reflexionsrichtungen die vorteilhaften Farbverläufe quasi von alleine ergeben oder durch gerichtete Sublimation mit verschiedenen Farben aus unterschiedlichen Richtungen fein verschachtelte Darstellungen registergenau mit verschiedenen Farben bedeckt werden.

### Bezugszeichenliste

- 10: optisch variables Flächenmuster
- 11: Banknote
- 12: Fensterfaden
- 13: Prägelackschicht
- 14: erste Facetten
- 15: zweite Facetten
- 16: reflektierende Beschichtung
- 17: erster Teilbereich
- 18: zweiter Teilbereich
- 19: transparente Zwischenschicht
- 20: erste lasierende Farbschicht
- 21: zweite lasierende Farbschicht
- 22: Facetten
- 23: lasierende Farbschicht
- 25: erster Balken
- 26: zweiter Balken
- 27: Facetten
- 28: Facetten
- 29: lasierende Farbschicht
- 30: Metallisierung
- L1: einfallendes Licht
- L2: reflektiertes Licht
- L3: reflektiertes Licht
- P1: Pfeil
- P2: Pfeil
- P3: Pfeil

## Patentansprüche

1. Optisch variables Flächenmuster (10), das zumindest zwei Teilbereiche (17, 18) mit Reflexionselementen (14, 15, 22, 27, 28) aufweist,
wobei die Reflexionselemente (14, 22, 27) des ersten Teilbereichs (17) einerseits und die Reflexionselemente (15, 22, 28) des zweiten Teilbereichs andererseits einfallendes Licht in unterschiedliche Reflexionsrichtungen reflektieren,
**dadurch gekennzeichnet, dass**
der erste Teilbereich (17) so mit einer ersten lasierenden Farbschicht (20, 23, 29) bedeckt ist, dass ein Betrachter, wenn der Betrachtungswinkel, unter dem der Betrachter das optisch variable Flächenmuster (10) betrachtet, geändert wird, bei Erreichen eines ersten Betrachtungswinkels (α1) den ersten Teilbereich (17) in einer ersten Farbe und bei Erreichen eines zweiten Betrachtungswinkels (α2) den zweiten Teilbereich (18) in einer von der ersten Farbe verschiedenen zweiten Farbe leuchten sieht, wobei
der zweite Teilbereich (18) mit einer zweiten lasierenden Farbschicht (21, 23, 29) bedeckt ist, die sich von der ersten lasierenden Farbschicht (20, 23, 29) im Farbton unterscheidet, und wobei
die Reflexionselemente (14, 15, 22, 27, 28) achromatisch reflektieren und durch Reliefstrukturen mit strahlenoptisch wirkenden reflektierenden Facetten gebildet sind, die als regelmäßige Sägezahngitter ausgebildet sind und wobei
zumindest ein weiterer Teilbereich mit Reflexionselementen vorgesehen ist, der mit einer weiteren lasierenden Farbschicht bedeckt ist, wobei die Reflexionselemente des weiteren Teilbereiches so orientiert sind, dass der Betrachter, wenn der Betrachtungswinkel geändert wird, bei Erreichen eines weiteren Betrachtungswinkels den weiteren Teilbereich in einer von der ersten und/oder zweiten Farbe verschiedenen Farbe leuchten sieht, und wobei eine Abfolge der Farben der beim Ändern des Betrachtungswinkels nacheinander leuchtenden Teilbereiche (17, 18) einen Farbwechsel in die und/oder aus der Farbe Weiß enthält, und wobei
die erste lasierende Farbschicht (20, 23, 29) zu den Reflexionselementen (14, 22, 27) des ersten Teilbereichs (17) eine Registergenauigkeit von kleiner als 200 µm, bevorzugt kleiner als 50 µm und besonders bevorzugt kleiner als 10 µm aufweist.

2. Optisch variables Flächenmuster (10), das zumindest zwei Teilbereiche (17, 18) mit Reflexionselementen (14, 15, 22, 27, 28) aufweist,
wobei die Reflexionselemente (14, 22, 27) des ersten Teilbereichs (17) einerseits und die Reflexionselemente (15, 22, 28) des zweiten Teilbereichs andererseits einfallendes Licht in unterschiedliche Reflexionsrichtungen reflektieren,
**dadurch gekennzeichnet, dass**
der erste Teilbereich (17) so mit einer ersten lasierenden Farbschicht (20, 23, 29) bedeckt ist, dass ein Betrachter, wenn der Betrachtungswinkel, unter dem der Betrachter das optisch variable Flächenmuster (10) betrachtet, geändert wird, bei Erreichen eines ersten Betrachtungswinkels (α1) den ersten Teilbereich (17) in einer ersten Farbe und bei Erreichen eines zweiten Betrachtungswinkels (α2) den zweiten Teilbereich (18) in einer von der ersten Farbe verschiedenen zweiten Farbe leuchten sieht, wobei
der zweite Teilbereich (18) mit einer zweiten lasierenden Farbschicht (21, 23, 29) bedeckt ist, die sich von der ersten lasierenden Farbschicht (20, 23, 29) im Farbton unterscheidet und wobei
die Reflexionselemente (14, 15, 22, 27, 28) achromatisch reflektieren und durch ausgerichtete Pigmente einer Druckfarbe realisiert sind.

3. Optisch variables Flächenmuster (10) nach Anspruch 2, **dadurch gekennzeichnet, dass** zumindest ein weiterer Teilbereich mit Reflexionselementen vorgesehen ist, der mit einer weiteren lasierenden Farbschicht bedeckt ist, wobei die Reflexionselemente des weiteren Teilbereiches so orientiert sind, dass der Betrachter, wenn der Betrachtungswinkel geändert wird, bei Erreichen eines weiteren Betrachtungswinkels den weiteren Teilbereich in einer von der ersten und/oder zweiten Farbe verschiedenen Farbe leuchten sieht.

4. Optisch variables Flächenmuster (10) nach einem der obigen Ansprüche, **dadurch gekennzeichnet, dass** eine Abfolge der Farben der beim Ändern des Betrachtungswinkels nacheinander leuchtenden Teilbereiche zumindest eine Farbe mehrmals aufweist.

5. Optisch variables Flächenmuster (10) nach einem der obigen Ansprüche, **dadurch gekennzeichnet, dass** eine Abfolge der Farben der beim Ändern des Betrachtungswinkels nacheinander leuchtenden Teilbereiche eine andere ist als eine Abfolge, die durch Interferenz bei einer Dünnfilmbeschichtung auftreten würde.

6. Optisch variables Flächenmuster (10) nach einem der obigen Ansprüche, **dadurch gekennzeichnet, dass** es einen Referenzbereich aufweist, der unter den entsprechenden Betrachtungswinkeln der Teilbereiche (17, 18) stets in derselben Farbe leuchtet.

7. Optisch variables Flächenmuster (10) nach einem der obigen Ansprüche, **dadurch gekennzeichnet, dass** die Farben, die die Teilbereiche für den Betrachter bei Betrachtung aufweisen, unabhängig vom Betrachtungswinkel sind.

8. Optisch variables Flächenmuster (10) nach Anspruch 2, **dadurch gekennzeichnet, dass** die erste lasierende Farbschicht (20, 23, 29) zu den Reflexionselementen (14, 22, 27) des ersten Teilbereichs (17) eine Registergenauigkeit von kleiner als 200 µm, bevorzugt kleiner als 50 µm und besonders bevorzugt kleiner als 10 µm aufweist.

9. Verwendung eines optisch variablen Flächenmusters (10) nach einem der obigen Ansprüche als Sicherheitselement, insbesondere als Sicherheitselement für ein Sicherheitspapier, Wertdokument oder dergleichen.

10. Wertdokument mit einem optisch variablen Flächenmuster nach einem der Ansprüche 1 bis 8.

## Claims

1. Optically variable surface pattern (10) comprising at least two sub-areas (17, 18) with reflective elements (14, 15, 22, 27, 28),
wherein the reflective elements (14, 22, 27) of the first sub-area (17) on the one hand and the reflective elements (15, 22, 28) of the second sub-area on the other hand reflect incident light in different directions of reflection,
**characterized in that**
the first sub-area (17) is covered with a first glazing color layer (20, 23, 29) such that an observer, when the viewing angle at which the observer views the optically variable surface pattern (10) is changed, upon reaching a first viewing angle (α1), sees the first sub-area (17) glow in a first color and, upon reaching a second viewing angle (α2), sees the second sub-area (18) glow in a second color different from the first color, wherein
the second sub-area (18) is covered with a second glazing color layer (21, 23, 29) that differs in color tone from the first glazing color layer (20, 23, 29), and wherein
the reflective elements (14, 15, 22, 27, 28) reflect achromatically and are formed by relief structures with ray-optically active reflective facets, which are designed as regular sawtooth grids, and
wherein
at least one further sub-area with reflective elements is provided, which is covered with a further glazing color layer, wherein the reflective elements of the further sub-area are oriented such that the observer, when the viewing angle is changed, upon reaching a further viewing angle, sees the further sub-area glow in a color different from the first and/or second color, and wherein
a sequence of the colors of the sub-areas (17, 18) that glow one after another when the viewing angle is changed includes a color change into and/or out of the color white, and wherein
the first glazing color layer (20, 23, 29) has a register accuracy of less than 200 µm, preferably less than 50 µm, and most preferably less than 10 µm, with respect to the reflective elements (14, 5, 22, 27) of the first sub-area (17).

2. Optically variable surface pattern (10) comprising at least two sub-areas (17, 18) with reflective elements (14, 15, 22, 27, 28),
wherein the reflective elements (14, 22, 27) of the first sub-area (17) on the one hand and the reflective elements (15, 22, 28) of the second sub-area on the other hand reflect incident light in different directions of reflection,
**characterized in that**
the first sub-area (17) is covered with a first glazing color layer (20, 23, 29) such that an observer, when the viewing angle at which the observer views the optically variable surface pattern (10) changes, upon reaching a first viewing angle (α1), sees the first sub-area (17) glow in a first color, and upon reaching a second viewing angle (α2), sees the second sub-area (18) glow in a second color different from the first color, wherein
the second sub-area (18) is covered with a second glazing color layer (21, 23, 29) that differs in color tone from the first glazing color layer (20, 23, 29), and wherein
the reflective elements (14, 15, 22, 27, 28) reflect achromatically and are realized by aligned pigments in a printing ink.

3. Optically variable surface pattern (10) according to claim 2, **characterized in that** at least one further sub-area with reflective elements is provided, which is covered with a further glazing color layer, wherein the reflective elements of the further sub-area are oriented such that the observer, when the viewing angle is changed, upon reaching a further viewing angle, sees the further sub-area glow in a color different from the first and/or second color.

4. Optically variable surface pattern (10) according to any one of the above claims,
**characterized in that** a sequence of the colors of the sub-areas that glow one after another when the viewing angle is changed includes at least one color multiple times.

5. Optically variable surface pattern (10) according to any one of the above claims,
**characterized in that** a sequence of the colors of the sub-areas that glow one after another when the viewing angle is changed is different from a sequence that would occur due to interference in a thin-film coating.

6. Optically variable surface pattern (10) according to any one of the above claims,
**characterized in that** it comprises a reference area which always glows in the same color at the corresponding viewing angles of the sub-areas (17, 18).

7. Optically variable surface pattern (10) according to any one of the above claims,
**characterized in that** the colors that the sub-areas exhibit to the observer upon viewing are independent of the viewing angle.

8. Optically variable surface pattern (10) according to claim 2, **characterized in that** the first glazing color layer (20, 23, 29) has a registration accuracy of less than 200 µm, preferably less than 50 µm, and most preferably less than 10 µm, with respect to the reflective elements (14, 22, 27) of the first sub-area (17).

9. Use of an optically variable surface pattern (10) according to one of the above claims as a security element, in particular as a security element for a security paper, a value document, or the like.

10. Value document having an optically variable surface pattern according to any one of claims 1 to 8.

## Revendications

1. Motif de surface (10) optiquement variable, comportant au moins deux zones partielles (17, 18) pourvues éléments de réflexion (14, 15, 22, 27, 28),
les éléments de réflexion (14, 22, 27) de la première zone partielle (17) d'une part et les éléments de réflexion (15, 22, 28) de la deuxième zone partielle d'autre part réfléchissant de la lumière incidente dans différentes directions de réflexion,
**caractérisé en ce que**
la première zone partielle (17) est recouverte d'une couche d'encre (20, 23, 29) de glaçage, de telle sorte que lors d'une modification de l'angle d'observation, sous lequel l'observateur observe le motif de surface (10) optiquement variable, à l'atteinte d'un premier angle d'observation (α1), un observateur voie la première zone partielle (17) luire dans une première couleur et à l'atteinte d'une deuxième angle d'observation (α2), il voie la deuxième zone partielle (18) luire dans une deuxième couleur différente de la première couleur,
la deuxième zone partielle (18) étant recouverte d'une deuxième couche d'encre (21, 23, 29) de glaçage, qui se différencie par sa teinte de la première couche d'encre (20, 23, 29) de glaçage et
les éléments de réflexion (14, 15, 22, 27, 28) réfléchissant achromatiquement et étant constitués par des structures en relief, pourvues de facettes réfléchissantes à effet de faisceau optique, qui sont conçues sous la forme de réseaux réguliers en dents de scie et
au moins une autre zone partielle pourvue d'éléments de réflexion étant prévue, qui est recouverte d'une autre couche d'encre de glaçage, les éléments de réflexion de l'autre zone partielle étant orientés de telle sorte que lors d'une modification de l'angle d'observation, à l'atteinte d'un autre angle d'observation, l'observateur voie l'autre zone partielle luire dans une couleur différente de la première et / ou de la deuxième couleur et
un enchainement des couleurs des zones partielles (17, 18) luisant successivement lors d'une modification de l'angle d'observation incluant un changement de couleur vers la et / ou à partir de la couleur blanche et
la première couche d'encre (20, 23, 29) de glaçage faisant preuve en rapport aux éléments de réflexion (14, 22, 27) de la première zone partielle (17) d'une précision de repérage inférieure à 200 µm, de manière préférentielle, inférieure à 50 µm et de manière particulièrement préférentielle, inférieure à 10 µm.

2. Motif de surface (10) optiquement variable, qui comporte au moins deux zones partielles (17, 18) pourvues d'éléments de réflexion (14, 15, 22, 27, 28),
les éléments de réflexion (14, 22, 27) de la première zone partielle (17) d'une part et les éléments de réflexion (15, 22, 28) de la deuxième zone partielle d'autre part réfléchissant de la lumière incidente dans différentes directions de réflexion,
**caractérisé en ce que**
la première zone partielle (17) est recouverte d'une couche d'encre (20, 23, 29) de glaçage, de telle sorte que lors d'une modification de l'angle d'observation, sous lequel l'observateur observe le motif de surface (10) optiquement variable, à l'atteinte d'un premier angle d'observation (α1), un observateur voie la première zone partielle (17) luire dans une première couleur et à l'atteinte d'une deuxième angle d'observation (α2), il voie la deuxième zone partielle (18) luire dans une deuxième couleur différente de la première couleur,
la deuxième zone partielle (18) étant recouverte d'une deuxième couche d'encre (21, 23, 29) de glaçage, qui se différencie par sa teinte de la première couche d'encre (20, 23, 29) de glaçage et
les éléments de réflexion (14, 15, 22, 27, 28) réfléchissant achromatiquement et étant réalisés par des pigments alignés d'une encre d'impression.

3. Motif de surface (10) optiquement variable selon la revendication 2, **caractérisé en ce qu'**il est prévu une autre zone partielle pourvue d'éléments de réflexion, qui est recouverte d'une autre couche d'encre de glaçage, les éléments de réflexion de l'autre zone partielle étant orientés de telle sorte que lors d'une modification de l'angle d'observation, à l'atteinte d'un autre angle d'observation, l'observateur voie l'autre zone partielle luire dans une couleur différente de la première et / ou de la deuxième couleur.

4. Motif de surface (10) optiquement variable selon l'une quelconque des revendications précédentes, **caractérisé en ce qu'**un enchaînement des couleurs des zones partielles luisant successivement lors de la modification de l'angle d'observation comporte plusieurs fois au moins une couleur.

5. Motif de surface (10) optiquement variable selon l'une quelconque des revendications précédentes, **caractérisé en ce qu'**un enchaînement des couleurs des zones partielles luisant successivement lors de la modification de l'angle d'observation est un autre qu'un enchaînement qui surviendrait par interférence dans le cas d'une revêtement par film mince.

6. Motif de surface (10) optiquement variable selon l'une quelconque des revendications précédentes, **caractérisé en ce qu'**il comporte une zone de référence, qui sous les angles d'observation correspondants des zones partielles (17, 18) luit toujours dans la même couleur.

7. Motif de surface (10) optiquement variable selon l'une quelconque des revendications précédentes, **caractérisé en ce que** les couleurs que comportent les zones partielles pour l'observateur lors de l'observation sont indépendantes de l'angle d'observation.

8. Motif de surface (10) optiquement variable selon la revendication 2, **caractérisé en ce que** la première couche d'encre (20, 23, 29) de glaçage fait preuve en rapport aux éléments de réflexion (14, 22, 27) de la première zone partielle (17) d'une précision de repérage inférieure à 200 µm, de manière préférentielle, inférieure à 50 µm et de manière particulièrement préférentielle, inférieure à 10 µm.

9. Utilisation d'un motif de surface (10) optiquement variable selon l'une quelconque des revendications précédentes en tant qu'élément de sécurité, notamment en tant qu'élément de sécurité pour un papier de sécurité, un document de valeur ou analogues.

10. Document de valeur, pourvu d'un motif de surface optiquement variable selon l'une quelconque des revendications 1 à 8.
